## Europäisches Patentamt
## European Patent Office
## Office européen des brevets

(19)

(11) Numéro de publication : **0 155 860**
**B1**

(12)

# FASCICULE DE BREVET EUROPÉEN

(45) Date de publication du fascicule du brevet :
07.06.89

(51) Int. Cl.⁴ : **H 04 N 9/47**, H 04 N 9/465

(21) Numéro de dépôt : 85400181.5

(22) Date de dépôt : 04.02.85

(54) Stabilisation en fréquence et en phase de codeurs/décodeurs vidéo couleurs.

(30) Priorité : 06.02.84 FR 8401888

(43) Date de publication de la demande :
25.09.85 Bulletin 85/39

(45) Mention de la délivrance du brevet :
07.06.89 Bulletin 89/23

(84) Etats contractants désignés :
AT BE CH DE FR GB IT LI LU NL SE

(56) Documents cités :
DE--A-- 2 514 324
FR--A-- 2 055 713
FR--A-- 2 283 612

(73) Titulaire : C.G.V. Compagnie Générale de Vidéotechnique
8 rue Alexandre Dumas
F-67000 Strasbourg (FR)

(72) Inventeur : Grandmougin, Gérard
16 rue Schwendi
F-67000 Strasbourg (FR)

(74) Mandataire : Armengaud Ainé, Alain
Cabinet ARMENGAUD AINE 3 Avenue Bugeaud
F-75116 Paris (FR)

Jouve, 18, rue St-Denis, 75001 Paris, France

## Description

La présente invention a pour objet des dispositifs et procédés de stabilisation en fréquence et en phase de codeurs/décodeurs de systèmes de vidéo couleurs. Il est bien connu que dans des systèmes tels que le système SECAM et le système PAL, les signaux diffèrent entre lignes de parités différentes, ce qui introduit une fréquence moitié H/2 de la fréquence ligne H. Lors du traitement des signaux, on va donc recourir à des dispositifs diviseurs ou multiplicateurs par 2 de la fréquence, ce qui peut introduire des déphasages de π, c'est-à-dire une opposition de phase.

Par exemple, si la série de tops de synchronisation ligne permet à la fois de déclencher les impulsions en dents de scie du balayage horizontal et l'émission des signaux de fréquence H/2, lorsque ces tops sont interrompus pour faire place aux signaux de synchronisation trame, on ne dispose plus de repère régulier des tops de synchronisation ligne à fréquence H et l'on peut créer au lieu des impulsions carrées de fréquence H/2 des impulsions dont la largeur correspond aux signaux de synchronisation trame et donc de fréquences différentes des fréquences H ou H/2. Il s'ensuit qu'à la reprise des tops de synchronisation ligne, on peut introduire des déphasages et en particulier le déphasage de π.

De plus, on peut toujours craindre l'apparition de signaux défectueux ou de signaux parasites. De même que les signaux de synchronisation trame perturbent des appareillages se référant aux tops de synchronisation ligne, l'apparition de signaux parasites supplémentaires, le décalage ou la détérioration, voire la disparition de signaux de référence peuvent perturber le fonctionnement en introduisant des déphasages particulièrement perturbants.

La présente invention a donc pour but de stabiliser les codeurs et/ou décodeurs en recourant à un stabilisateur émettant continuellement des signaux de synchronisation ligne même pendant les passages de signaux de synchronisation trame et pendant des perturbations (décalages, déformations, disparitions, apparitions, etc.).

Pour ce faire, on recourt essentiellement à l'association d'un oscillateur calé sur une fréquence liée à la fréquence ligne (essentiellement H ou H/2) et qui s'y maintient quoi qu'il advienne, avec un circuit à blocage de phase qui, selon un mode de réalisation préféré de l'invention, peut être une boucle à blocage de phase (« Phase Locked Loop » ou « PLL »). Des solutions de ce genre sont notamment décrites par les brevets FR-A-2 055 713 et FR-A-2 283 612, ainsi que dans le brevet allemand DE-A-2 514 324.

Mais les solutions techniques actuellement connues présentent généralement des inconvénients, les unes ayant certes l'avantage d'une plage de capture infinie mais sujettes à des sauts de phases, tandis que les autres ne créent pas de sauts de phase mais n'offrent qu'une plage réduite de capture. Dans ce dernier cas, on se trouve obligé de recourir à un gain d'amplification important dans le dispositif de blocage de phase, ce qui nécessite des composants d'autant plus précis et coûteux.

Selon l'invention, on va donc rechercher à la fois une plage suffisamment large pour couvrir tous les cas possibles, et une simplicité de réalisation apportant fiabilité et bas prix de revient.

Le dispositif conforme à l'invention a donc essentiellement pour but de fournir au codeur/décodeur des signaux à fréquence liée à la fréquence ligne (essentiellement H/2 ou H) sans introduction d'erreurs ou de causes d'erreurs. Il fait appel à des dispositifs du type oscillateur ou équivalent asservis à la fréquence ligne, associés à un dispositif à blocage de phase du type boucle PLL et à au moins un dispositif du type bascule ou équivalent, l'ensemble pilotant le codeur/décodeur.

Selon l'invention, le dispositif de stabilisation en fréquence et en phase d'un codeur/décodeur pour systèmes de vidéo couleurs considérés se caractérise en ce qu'il comporte un circuit de blocage de phase comprenant un amplificateur, une porte OU, un filtre et un oscillateur commandé en tension, ledit circuit recevant à l'entrée un signal de synchronisation, et au moins une bascule de type D dont les entrées reçoivent le signal de sortie de l'oscillateur du circuit de blocage de phase à travers un circuit complémentaire et une porte inverseuse, la sortie de la bascule fournissant un signal de commande au codeur/décodeur, la bascule comportant une entrée d'horloge recevant un signal de synchronisation.

Dans le cas de la réception de signaux vidéo, par exemple du type PAL, ceux-ci sont orientés d'une part vers le séparateur de synchronisation, d'autre part vers un circuit décodeur PAL qui transmet des signaux de différence R-Y et B-Y à un dispositif de matriçage recevant par ailleurs les signaux de luminance Y, ce qui lui permet de restituer des signaux de chrominance R, V, B que l'on associe aux signaux de synchronisation issus du séparateur. Un tel ensemble peut donc être utilisé en interface par exemple entre des appareillages PAL ou SECAM.

Selon une caractéristique particulière, le circuit complémentaire est un circuit différentiateur, la bascule comportant une entrée d'horloge recevant le signal de synchronisation et étant réunie à une seconde bascule ayant ses entrées reliées à travers un circuit différentiateur pour l'une et directement pour l'autre aux sorties de la première bascule, l'entrée d'horloge de la seconde bascule étant reliée à la sortie d'un circuit monostable commandé par le signal de synchronisation.

En variante, la sortie de la première bascule fournit le signal de commande au codeur/décodeur à travers le circuit complémentaire comportant un circuit monostable et un circuit différentiateur formé d'une résistance et d'une capacité.

Dans le cas de la variante précédente, le circuit différentiateur est constitué par une seconde bascule recevant le signal de sortie de l'oscillateur sur son entrée d'horloge, la sortie de la seconde bascule étant reliée à la masse par un condensateur et à l'entrée de la première bascule.

Pour mieux faire comprendre les caractéristiques techniques et les avantages de la présente invention, on va en décrire des exemples de réalisation étant bien entendu que ceux-ci ne sont pas limitatifs quant à leur mode de mise en œuvre et aux applications qu'on peut en faire.

On se référera aux Figures suivantes qui représentent schématiquement :

La Figure 1, un diagramme-bloc d'un dispositif interface PAL/SECAM dont le décodeur PAL est piloté par un dispositif conforme à l'invention ;

La Figure 2, un diagramme-bloc d'un décodeur PAL ;

La Figure 3, un diagramme-bloc d'un circuit de matriçage ;

Les Figures 4, 6 et 7, trois variantes de modes de réalisation de dispositifs de stabilisation en fréquence et en phase conformes à l'invention ;

La Figure 6, un chronogramme des impulsions en divers points du circuit de la Figure 4.

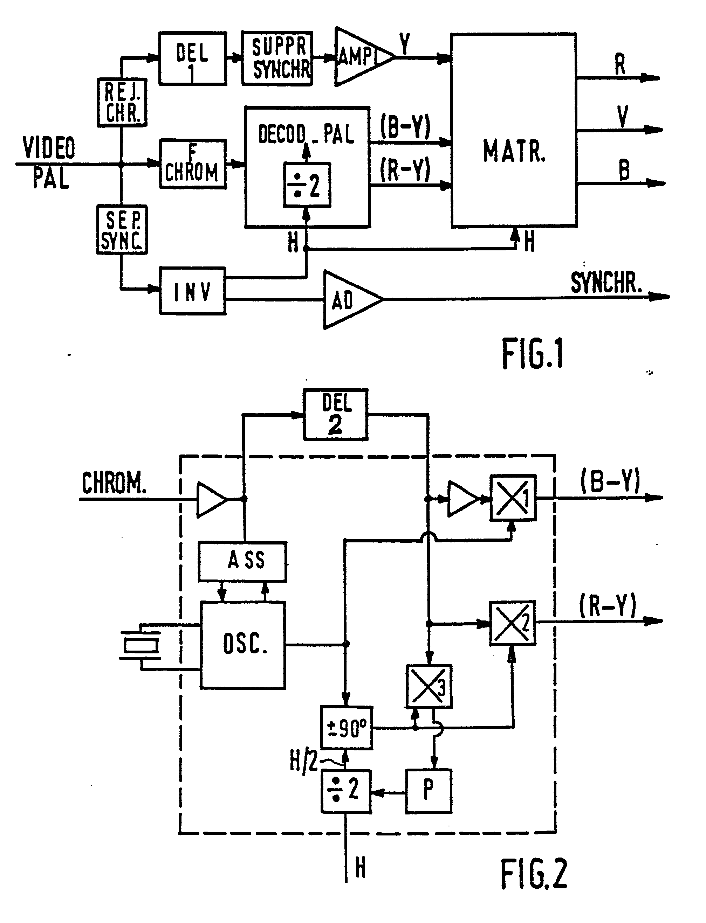

A la Figure 1, est représenté schématiquement un ensemble interface recevant d'un côté des signaux vidéo de type PAL et les traitant, pour émettre à la sortie des signaux RVB (rouge, vert, bleu) ainsi que les signaux de synchronisation, ce qui permet la connexion par exemple à un appareil SECAM équipé d'une prise destinée à recevoir de tels signaux. Ce type d'interface permet donc de relier tout appareillage à codage PAL (ordinateur, jeu vidéo, magnétoscope ou autre) à un appareillage SECAM (console de visualisation, téléviseur ou autre).

Les signaux vidéo PAL (VIDEO PAL) sont amenés de première part à un séparateur de signaux de synchronisation (SEP. SYNC), de seconde part à un filtre de signaux de chrominance (F. CHROM) suivi d'un décodeur PAL (DECOD. PAL) et de troisième part à un circuit réjecteur de signaux de chrominance (REJ. CHR.) suivi d'une ligne à retard (DEL. 1), d'un circuit suppresseur de tops de synchronisation (SUPPR. SYNCHR.) et d'un amplificateur (AMPL.). Sur la première voie, le séparateur synchro (SEP. SYNC) est suivi d'un ensemble (INV.) qui sera décrit plus en détail ci-après et qui correspond à la partie essentielle de la présente invention. Cet ensemble émet d'une part les signaux de synchronisation (SYNCHR.) par l'intermédiaire d'un adaptateur d'impédance (AD.), signaux que l'on retrouvera à la sortie de l'interface, et d'autre part les signaux stabilisés en fréquence et en phase que l'on amène au décodeur (DECOD. PAL) et à un circuit de matriçage (MATR.). On notera que si ce décodeur inclut un diviseur par 2 (comme indiqué à la Figure 1), pour passer de la fréquence ligne H à la demi-fréquence H/2, il n'est pas nécessaire de prévoir un diviseur. Si au contraire, le décodeur (DECOD. PAL) ne prévoit pas cette division, il est nécessaire de l'assurer soit dans l'ensemble (INV.) conforme à l'invention, soit sur la connexion entre l'ensemble (INV.) et le décodeur (DECOD. PAL). Sur la seconde voie (F. CHROM. DECOD. PAL), on recueille à la sortie les signaux de différence R-Y et B-Y, tandis que la troisième voie (REJ. CHR., DEL. 1, SUPPRE. SYNCHR., AMPL.) donne les signaux de luminance Y. L'ensemble des signaux R-Y, B-Y et Y est traité dans le circuit de matriçage (MATR.) à la sortie duquel on recueille les signaux RVB qui, joints aux signaux de synchronisation mentionnés plus haut, constituent les éléments permettant le branchement de l'interface vers l'aval.

Le circuit décodeur PAL peut être de tout type classique et peut, par exemple, être organisé autour de circuits intégrés adéquats comme on le verra ci-dessous. Les fonctions essentielles en sont illustrées par la Figure 2 qui correspond au cas de la Figure 1, c'est-à-dire incluant le circuit diviseur par 2 de la fréquence.

Après amplification, les signaux issus du filtre (F. CHROM.) de la Figure 1, sont amenés d'une part à un ensemble constitué par un dispositif d'asservissement (ASS.) et un oscillateur piloté par quartz, d'autre part à une ligne à retard (DEL. 2). Deux multiplicateurs de signaux analogiques X1, X2, sont connectés en amont, le premier X1 à la ligne à retard (DEL. 2) via un amplificateur ainsi qu'à l'ensemble OSC/ASS, le second X2 à la ligne à retard DEL. 2 et à un dispositif de déphasage de ± 90° relié à l'oscillateur (OSC.) et au diviseur par 2 ( : 2) recevant les signaux de synchronisation à la fréquence H du dispositif INV. (Figure 1). Un portier (P) corrige le diviseur sous le contrôle du circuit X3 lui-même connecté en amont au déphaseur de ± 90° et à la ligne à retard (DEL. 2). Ce portier assure aussi les passages blanc-noir/couleurs. On recueille à la sortie des multiplicateurs X1 et X2 des signaux (B-Y) et (R-Y) dont la tension est proportionnelle à l'amplitude du signal d'entrée et au déphasage, et que l'on envoie au matriçage (Figure 1). On notera que la ligne à retard (DEL. 1) n'est pas indispensable mais améliore la qualité des signaux.

Ce circuit peut être par exemple réalisé sur la base d'un circuit intégré de type TEA (§éà (THOMSON-EFCIS) qui correspond au contenu du cadre en pointillés de la Figure 2.

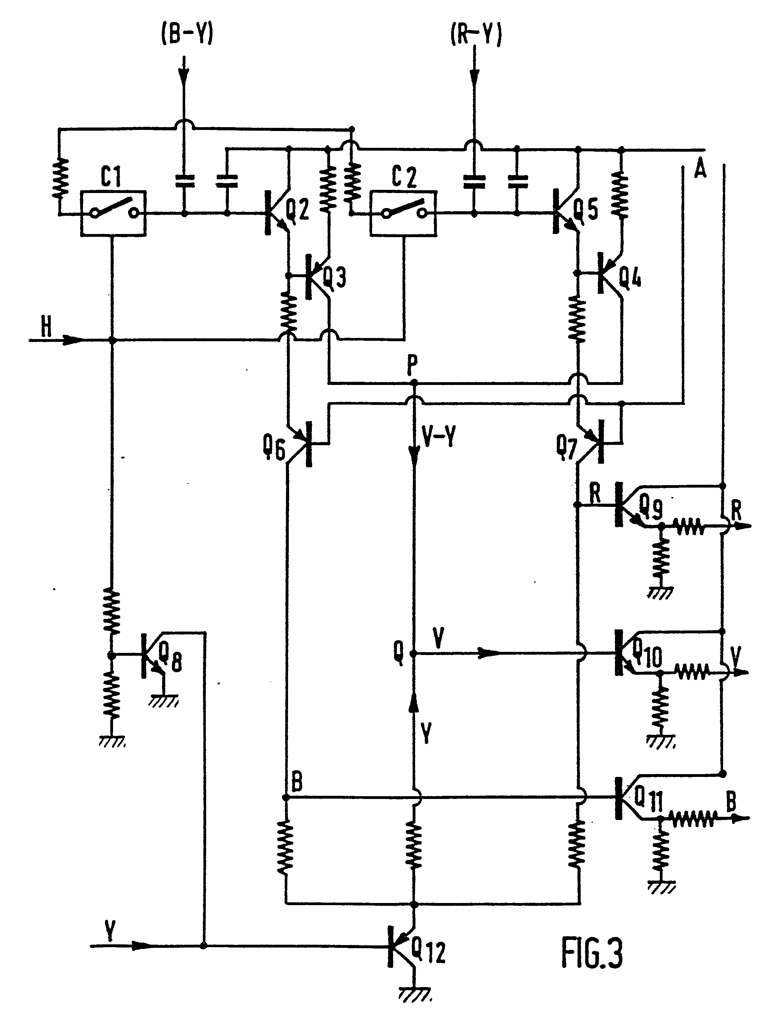

En ce qui concerne le matriçage (MATR.) de la Figure 1, on peut recourir à un circuit du type de celui de la Figure 3 qui reçoit de l'amplificateur (Figure 1) les signaux de luminance Y, du décodeur les signaux de différence (B-Y) et (R-Y) et du circuit INV. les impulsions à fréquence de ligne H.

Les transistors Q2 et Q5 fonctionnent en abaisseurs d'impédance et sont suivis d'une part des transistors Q3 et Q4 fonctionnant en générateurs de courant, ce qui crée les deux composantes, fonction de B-Y et R-Y, qui en s'additionnant au point P donnent V-Y et, d'autre part, des transistors Q6 et Q7 fonctionnant également en générateurs de courant donnant respectivement B et R. Les commutateurs électroniques C1 et C2 assurant le clamping sont commandés à la fréquence H. Par ailleurs, le transistor Q12 fournit le courant Y qui s'ajoutant en Q au courant V-Y donne V, le transistor Q8 assurant de son côté le clamping à cette même fréquence ligne.

Les signaux R, V, B ainsi obtenus sont dirigés via les transistors Q9, Q10, Q11 vers les sorties de l'ensemble interface de la Figure 1.

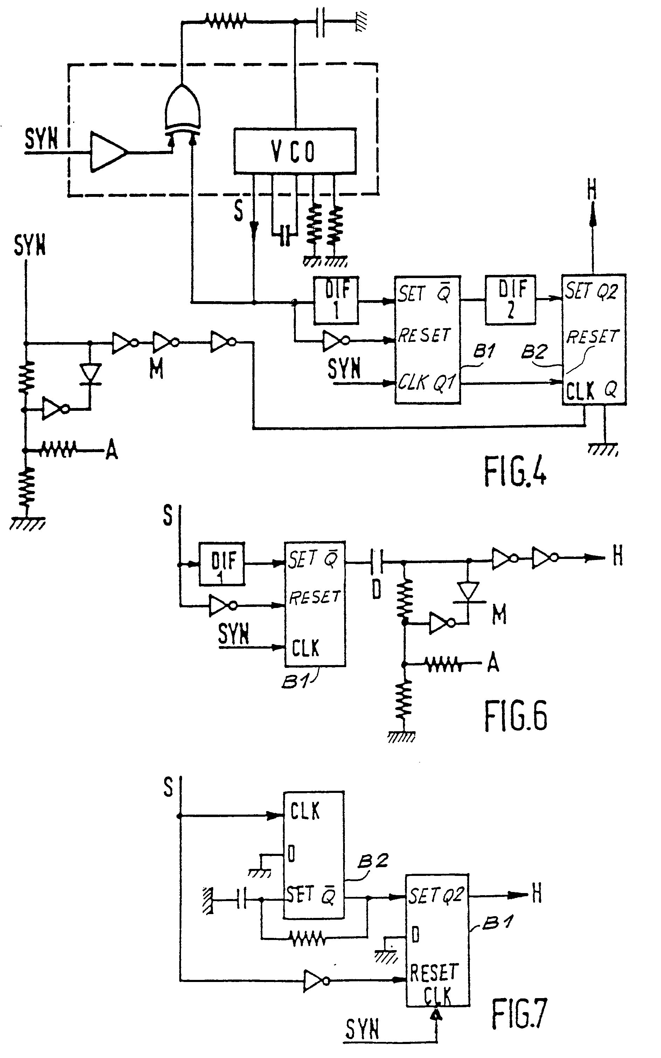

En ce qui concerne la partie essentielle de l'invention, à savoir l'ensemble INV. de la Figure 1, trois modes de réalisation vont faire l'objet des Figures 4, 6 et 7. A la Figure 4, est représenté un dispositif conforme à l'invention tel que (INV.) à la Figure 1. Il reçoit les signaux de synchronisation SYN. du séparateur synchro (SEP. SYNC.) de la Figure 1. Ces signaux sont amenés à l'entrée de la boucle de blocage de phase constituée par l'amplificateur, la porte OU impératif, le filtre F et l'oscillateur VCO commandé par tension. Les signaux recueillis en S devraient théoriquement être stabilisés en fréquence et en phase. En fait, cette dernière est incertaine et fait l'objet des traitements subséquents qui commencent par l'amenée à une bascule B1 à montage de type D, d'une part à l'entrée SET via un différentiateur DIF1, d'autre part à l'entrée RESET via une porte inverseuse. Cette bascule reçoit à l'entrée horloge CLK les signaux de synchronisation, et ses sorties Q et Q̄ sont respectivement connectées à une seconde bascule B2 à montage de type D, à l'entrée SET via un second différentiateur DIF. 2, d'une part et à l'entrée RESET d'autre part.

Un monostable M alimenté en A, recevant des signaux de synchronisation, et fonctionnant en générateur d'impulsions à fréquence ligne, attaque l'entrée CLK de la seconde bascule B2, dont la sortie Q2 émet des impulsions à la fréquence ligne H stabilisées en phase et en fréquence.

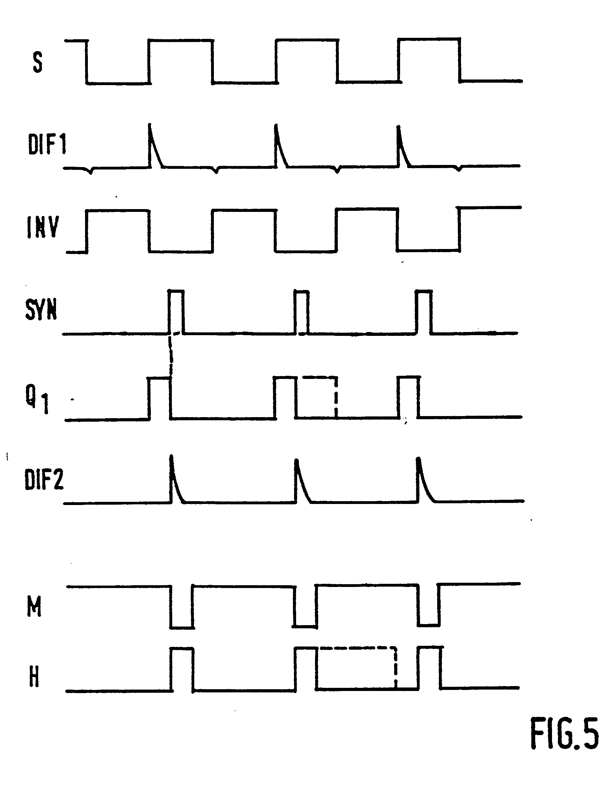

La Figure 5 illustre sous forme de chronogramme le traitement de ces signaux.

A la sortie S de la boucle PLL, on recueille les impulsions carrées représentées à la courbe S de la Figure 5, ce qui à la sortie du différentiateur donne des impulsions de la forme DIF correspondant aux fronts montants des créneaux de la courbe S, tandis que la porte inverseuse met en opposition de phase les signaux S. On reçoit donc les signaux DIF. 1 à l'entrée SET et les signaux INV issus de la porte à l'entrée RESET de la bascule B1 qui, par ailleurs, reçoit en CLK les signaux SYN. A la sortie Q de la bascule B1, on recueille les signaux de la courbe Q1. Le front montant de ces signaux correspond au front montant des signaux S mais leur front descendant correspond à l'attaque des signaux SYN. Supposant que la seconde impulsion SYN manque, la seconde impulsion de Q1 gardera la largeur de l'impulsion S correspondante (profil en pointillés) mais le nombre n'en sera pas modifié. Il en serait de même si cette seconde impulsion SYN était trop tardive, et venait après le front descendant de l'impulsion S correspondante. Si plusieurs impulsions se présentaient au cours d'une même période, seule la première compterait.

La seconde bascule B2 reçoit donc en S les signaux DIF. 2 issus du différentiateur et dont les impulsions correspondent aux fronts descendants des impulsions Q1. Le monostable déclenché par les impulsions SYN. émet les signaux M. Là encore, si par exemple manque la seconde impulsion M, on retrouve en Q2 une largeur différente (en pointillés) mais sans modification du nombre d'impulsions. Le maintien de la fréquence H est donc assuré sans déphasage puisque, même si quelques différences de largeurs apparaissent, la régularité est assurée. La première bascule assure la mise en phase du front descendant de l'impulsion, la seconde celle du front montant. On notera que, dans le circuit de cette Figure 4, on peut utiliser des composants fort simples pour le monostable M, le filtre F et les différentiateurs DIF. 1 et DIF. 2. En ce qui concerne le cadre en pointillés, on peut recourir à un circuit intégré tel que le CD. 4046 (NATIONAL SEMICONDUCTOR) et pour les bascules, les deux moitiés d'un circuit intégré CD. 4013 du même fabricant.

En variante au dispositif de la Figure 4, on peut placer le monostable non en amont de la dernière bascule mais en aval, comme représenté à la Figure 6. La capacité et la résistance associées forment le différentiateur D et sont eux-mêmes associés au monostable M. On retrouve ici, sous les mêmes références, les mêmes éléments mais on retrouve les constituants du monostable à la sortie Q̄ de la bascule B1. On peut également, comme le représente la Figure 7, utiliser la première bascule comme monostable et différentiateur. Sur cette Figure, les signaux S issus de la boucle de blocage de phase arrivent d'une part à l'entrée horloge CLK de la bascule B1 et, d'autre part via une porte inverseuse à l'entrée RESET de la seconde bascule B2. La sortie Q̄ de la bascule B1 est reliée à la fois à l'entrée S1 de cette même bascule et à l'entrée SET de la seconde B2. A cette sortie Q̄, on obtient non pas des impulsions du type DIF. 1 (Figure 5) mais du type Q1 (Figure 5). La seconde bascule B2 reçoit les signaux de synchronisation SYN en CLK et émet en Q2 les impulsions H que l'on envoie à un monostable non représenté, comme à la Figure 6. La bascule B2 joue donc dans ce cas le rôle de B1 aux Figures 4 et 6 tandis que la bascule B1 joue ici le rôle du différentiateur DIF. 1 de ces mêmes Figures. On peut également faire jouer à la bascule B1 le rôle de monostable.

Les dispositifs conformes à l'invention tels que ceux faisant l'objet des Figures 4, 6 et 7 peuvent fonctionner avec des décodeurs PAL comme à la Figure 1 mais peuvent également fonctionner avec d'autres types de codeurs ou décodeurs, par exemple de type SECAM.

Il est également évident que, sans sortir du cadre de la présente invention, on peut utiliser ces dispositifs pour fournir à tout système vidéo des impulsions à la fréquence ligne (ou à toute fréquence liée à la fréquence ligne et en particulier à la fréquence moitié) stabilisées aussi bien en fréquence qu'en phase et sans interruptions (dues essentiellement aux passages de signaux de synchronisation de trame) et sans perturbations (dues à des déformations, disparitions ou apparitions d'impulsions).

## Revendications

1. Dispositif de stabilisation en fréquence et en phase d'un codeur/décodeur pour système de vidéo couleurs, caractérisé en ce qu'il comporte un circuit de blocage de phase comprenant un amplificateur, une porte OU, un filtre et un oscillateur commandé en tension (VCO), ledit circuit recevant à l'entrée un signal de synchronisation (SYN) et au moins une bascule (B1) de type D dont les entrées (SET) et (RESET) reçoivent le signal (S) de sortie de l'oscillateur du circuit de blocage de phase à travers un circuit complémentaire et une porte inverseuse, la sortie de la bascule (B1) fournissant un signal de commande au codeur/décodeur, la bascule comportant une entrée d'horloge (CLK) recevant un signal de synchronisation (SYN).

2. Dispositif selon la revendication 1, caractérisé en ce que le circuit complémentaire est un circuit différentiateur (DIF 1), la bascule (B1) comportant une entrée d'horloge (CLK) recevant le signal de synchronisation (SYN) et étant réunie à une seconde bascule (B2) ayant ses entrées (SET) et (RESET) reliées à travers un circuit différentiateur (DIF 2) pour l'une et directement pour l'autre aux sorties (Q̄) et (Q1) de la première bascule (B1), l'entrée d'horloge (CLK) de la seconde bascule étant reliée à la sortie d'un circuit monostable (M) commandé par le signal de synchronisation (Figure 4).

3. Dispositif selon la revendication 1, caractérisé en ce que la sortie (Q̄) de la première bascule (B1) fournit le signal de commande au codeur/décodeur à travers le circuit complémentaire comportant un circuit monostable (M) et un circuit différentiateur (D) formé d'une résistance et d'une capacité (Figure 6).

4. Dispositif selon la revendication 3, caractérisé en ce que le circuit différentiateur est constitué par une seconde bascule (B2) recevant le signal de sortie (S) de l'oscillateur sur son entrée d'horloge (CLK), la sortie (Q̄) de la seconde bascule (B2) étant reliée à la masse par un condensateur et à l'entrée (SET) de la première bascule (B1) (Figure 7).

## Claims

1. Frequency and phase stabilization device for a coder/decoder for colour video system, characterized in that it comprises a phase locking circuit containing an amplifier, an OR gate, a filter and a voltage controlled oscillator (VCO), said circuit receiving at the input a synchronization signal (SYN), and at least one D-type flip-flop (B1), of which the (SET) and (RESET) inputs receive the output signal (S) from the oscillator of the phase locking circuit through a complementary circuit and an inverter gate, the output from the flip-flop (B1) supplying a control signal to the coder/decoder, the flip-flop comprising a clock input (CLK) receiving a synchronization signal (SYN).

2. Device according to claim 1, characterized in that the complementary circuit is a differentiator circuit (DIF 1), the flip-flop (B1) which comprises a clock input (CLK) receiving the synchronization signal (SYN) and being connected to a second flip-flop (B2) having its (SET) and (RESET) inputs connected through a differentiator circuit (DIF 2) in the case of the one and directly in the case of the other to the outputs (Q̄) and (Q1) of the first flip-flop (B1), the clock input (CLK) of the second flip-flop being connected to the output of a monostable circuit (M) controlled by the synchronization signal (Figure 4).

3. Device according to claim 1, characterized in that the output (Q̄) of the first flip-flop (B1) supplies the control signal to the coder/decoder through the complementary circuit containing a monostable circuit (M) and a differentiator circuit (D) formed of a resistor and a capacitor (Figure 6).

4. Device according to claim 3, characterized in that the differentiator circuit is constituted of a second flip-flop (B2) receiving the output signal (S) from the oscillator at its clock input (CLK), the output (Q̄) of the second flip-flop (B2) being connected to earth by a capacitor and to the (SET) input of the first flip-flop (B1) (Figure 7).

## Patentansprüche

1. Vorrichtung zur Frequenz- und Phasenstabilisierung von Farbvideocodern/-decodern, dadurch gekennzeichnet, daß sie eine Phasensynchronisationsschaltung beinhaltet, die einen Verstärker, ein Oder-Tor, ein Filter und einen spannungsgesteuerten Oszillator (VCO) umfaßt, wobei diese Schaltung am Eingang ein Synchronisationssignal (SYN) empfängt, und mindestens eine Kippschaltung (B1) vom Typ D enthält, an deren Eingängen (SET) und (RESET) das Ausgangssignal (S) des Oszillators der Phasensynchronisationsschaltung durch eine komplementäre Schaltung und ein inverses Tor empfangen wird, der Ausgang der Kippschaltung (B1) ein Steuersignal an den Coder/Decoder abgibt, und die Kippschaltung einen Taktgeber-Eingang (CLK) umfaßt, der ein Synchronisationssignal (SYN) empfängt.

2. Vorrichtung nach Anspruch 1, dadurch gekennzeichnet, daß die komplementäre Schaltung eine Differenzierschaltung (DIF 1) ist, die Kippschaltung (B1) einen Taktgeber-Eingang (CLK) aufweist, der das Synchronisationssignal (SYN) empfängt und mit einer zweiten Kippschaltung (B2) verbunden ist, wobei einer der Eingänge (SET) und (RESET) über eine Differenzierschaltung (DIF 2) und der andere direkt mit den Ausgängen (Q̄) und (Q1) der ersten Kippschaltung (B1) verbunden sind, und der Taktgeber-Eingang (CLK) der zweiten Kippschaltung am Ausgang mit einer monostabiler Schaltung (M) verbunden ist, der durch das Synchronisationssignal gesteuert wird (Fig. 4).

3. Vorrichtung nach Anspruch 1, dadurch gekennzeichnet, daß der Ausgang (Q̄) der ersten Kippschaltung (B1) das Steuersignal an den Coder/Decoder über die Komplementärschaltung abgibt, der eine monostabile Schaltung (M) und eine Differenzierschaltung (D) umfaßt, die aus einem Widerstand und einem Kondensator besteht (Fig. 6).

4. Vorrichtung nach Anspruch 3, dadurch gekennzeichnet, daß die Differenzierschaltung aus einer zweiten Kippschaltung (B2) besteht, die das Signal des Ausgangs (S) des Oszillators durch ihren Taktgeber-Eingang (CLK) empfängt, und der Ausgang (Q̄) der zweiten Kippschaltung (B2) über einen Kondensator mit Masse und mit dem Eingang (SET) der ersten Kippschaltung (B1) verbunden ist (Fig. 7).

FIG.1

FIG.2

1

FIG.3

EP 0 155 860 B1

FIG.4

FIG.6

FIG.7

FIG.5